# EUROPEAN PATENT SPECIFICATION

(11) **EP 1 795 914 B1**
(45) Date of publication and mention of the grant of the patent: **24.09.2008**
(21) Application number: 06125482.7
(22) Date of filing: 06.12.2006
(51) Int. Cl.: G01S 13/34, G01S 7/35, G01S 13/93

(54) **RF transceiver module and millimeter-wave FMCW radar sensor using the same**
Sender-Empfänger-Modul und milimeterwellenbereich-FMCW Radar dieses Modul verwendend
Module émetteur récepteur et radar FMCW millimétrique utilisant ce module

(30) Priority: 07.12.2005 KR 20050119051; 07.06.2006 KR 20060050820
(43) Date of publication of application: 13.06.2007
(73) Proprietor: Electronics and Telecommunications Research Institute, Daejeon (KR)
(72) Inventor: Hong, Ju Yeon, Seoul (KR); Yoon, Hyung Sup, Daejeon (KR); Lee, Kyung Ho, Daejeon (KR); Kang, Dong Min Songgang Green Apt. 318-205, Daejeon (KR); Shim, Jae Yeob, Daejeon (KR)
(74) Representative: Betten & Resch

(56) References cited:
- US-A1- 3 197 773
- US-A1- 2002 180 632
- US-A1- 2004 012 517
- US-A1- 2004 150 548

## Description

### BACKGROUND

### 1. Field of the Invention

The present invention relates to a radio frequency (RF) transceiver module having an improved connection structure between main components and capable of improving reception sensitivity, and a millimeter-wave frequency modulated continuous wave (FMCW) radar sensor using the RF transceiver.

### 2. Discussion of Related Art

In general, various types of sensors employed in motor vehicles have been devised based on technologies such as ultrasonic radar, image sensing, laser sensing, and millimeter-wave radar. Ultrasonic radar sensors are small and relatively inexpensive but have poor reception sensitivity. Thus, they are appropriate for short-range warning but not for detecting obstacles during high-speed travel as their operation is affected by the surrounding environment. Image sensors cannot easily detect obstacles in real time due to the complex image processing, etc. involved, and exhibit poor performance in bad weather. Laser sensors have been developed to detect obstacles at long range using a near-infrared laser, but exhibit poor performance in bad weather such as fog, rain, etc. On the other hand, millimeter-wave radar detectors show little difference in performance between day and night and in varying weather conditions, and thus are known to be the most appropriate technology for use in motor vehicles.

A millimeter-wave FMCW radar sensor generally comprises an RF transceiver module, a digital signal processing (DSP) unit for signal processing, a controller area network (CAN) interface unit, a display unit and a processor. And, the RF transceiver module comprises a voltage-controlled oscillator (VCO) generating a FMCW-modulated signal, an amplifier amplifying a millimeter-wave output signal of the VCO, a transmitting antenna transmitting the amplified signal, a receiving antenna receiving a signal reflected from an object, a low-noise amplifier amplifying the received signal, a mixer detecting a beat signal carrying information on a relative velocity of the object and a distance from the object, and an intermediate frequency (IF) unit processing the beat signal.

Meanwhile, an RF transceiver module for a millimeter-wave radar sensor using a monolithic microwave integrated circuit (MMIC) is a core component disposed in the front part of the radar sensor and managing wireless communication. Reception sensitivity of the RF transceiver module is a very important factor determining the range of the radar sensor. Therefore, in order to increase the range of the RF transceiver module, reception sensitivity of the RF transceiver module must be improved.

However, in a conventional RF transceiver module using a homodyne solution, a transmission modulation signal affects a received signal and thus an isolation characteristic of a receiving unit deteriorates. Consequently, high-sensitivity reception in a radar sensor becomes impossible.

US 2002/180632 describes an FM-CW radar system, wherein a frequency modulating wave output from said modulating signal generator has a frequency variation skew with respect to a time axis (modulation skew), and the radar system includes a means for varying the modulation skew by controlling the modulation frequency amplitude or modulation period of the modulating signal. The radar system further includes a means for discriminating a signal component varying in response to the variation of the modulation skew, thereby discriminating a signal related to a target object from other signals. In the case of an FM-CW radar system that performs transmission and/or reception by time division ON-OFF control, the radar system includes a means for discriminating a signal which, when the frequency used to perform the ON-OFF control is varied, varies in response to the variation of the frequency, thereby discriminating a signal related to a target object from other signals.

US 3,197,773 describes a radar apparatus comprising means for transmitting a double-frequency modulated carrier wave toward a reflecting object, means for heterodyning signals reflected from this object in order to produce a beat signal, frequency selecting means for selecting sideband signal components, and means for determining a mean frequency of the sideband signal components.

US 2004/012517 discloses a radar test system for testing the performance of an automotive radar system includes circuitry for multiple down and up conversions of a signal from the automotive radar. Conditioning circuitry is further included to delay an intermediate frequency signal (IF2) obtained after the second down conversion to simulate the delay of a return signal from an object located a particular distance from the automotive radar system, and to attenuate the IF2 signal to simulate variable target sizes, and to generate a Doppler shift in the IF2 signal to simulate target speed. The conditioned signal is up-converted and transmitted back to the automotive radar system to determine if the automotive radar provides accurate readings for distance, size and speed. The radar test system further couples the second IF signal to a spectrum analyzer for determining if the automotive radar system is operating in the desired bandwidth and to a power meter for determining if the automotive radar system is transmitting at a desired power level.

US 2004/150548 describes a double side band diplex linear frequency modulated superimposed radar system determining the range of targets as a function of the amplitude variation of reflected target Doppler signals. The system includes a real radar system that accurately determines the range of fading targets and the magnitude of the velocity of the targets. It also includes a complex radar system that determines the relative velocity of targets in addition to the range of targets and a real radar system having BPSK modulation. The selection of BPSK modulation enables or facilitates the implementation of a portion of the system in digital form.

### SUMMARY OF THE INVENTION

The present invention is directed to a structure for improving reception sensitivity and separation of a transmitted signal and a received signal without using a conventional homodyne solution to construct a radio frequency (RF) transceiver module of a vehicle radar sensor. More specifically, the RF transceiver module used in a millimeter-wave frequency modulated continuous wave (FMCW) radar sensor basically comprises: a voltage-controlled oscillator (VCO); a transmitting unit comprising a frequency multiplier, a driver amplifier, a power amplifier and a frequency division circuit; and a receiving unit comprising a low-noise amplifier, a down frequency mixer, a filter and an intermediate frequency (IF) amplifier. The RF transceiver module uses a local oscillator (LO) generating a signal fa and a mixer balance-mixing the signal fa with a modulation output signal (fo+fm) output from the VCO of the transmitting unit, thereby inputting a first signal (fo+fm+fa) and a second signal (fo+fm-fa) output from the mixer to two frequency mixers of the receiving unit. Thus, the RF transceiver module can solve the problem of signal interference between the transmitting unit and the receiving unit caused in the conventional art when a modulation signal output from a VCO of the transmitting unit is directly used, and improve signal reception.

The present invention is also directed to an apparatus for a millimeter-wave FMCW radar sensor using the above-described RF transceiver module.

### BRIEF DESCRIPTION OF THE DRAWINGS

The above and other objects, features and advantages of the present invention will become more apparent to those of ordinary skill in the art by describing in detail exemplary embodiments thereof with reference to the attached drawings in which:

FIG. 1 is a block diagram showing a constitution of a millimeter-wave frequency modulated continuous wave (FMCW) radar sensor employing a radio frequency (RF) transceiver module according to an exemplary embodiment of the present invention; and

FIG. 2 is a block diagram of an RF transceiver module according to an exemplary embodiment of the present invention.

### DETAILED DESCRIPTION OF EXEMPLARY EMBODIMENTS

Hereinafter, exemplary embodiments of the present invention will be described in detail. However, the present invention is not limited to the embodiments disclosed below, but can be implemented in various forms. Those of ordinary skill in the art describe the following embodiments in order for this disclosure to be complete and enabling of practice of the invention.

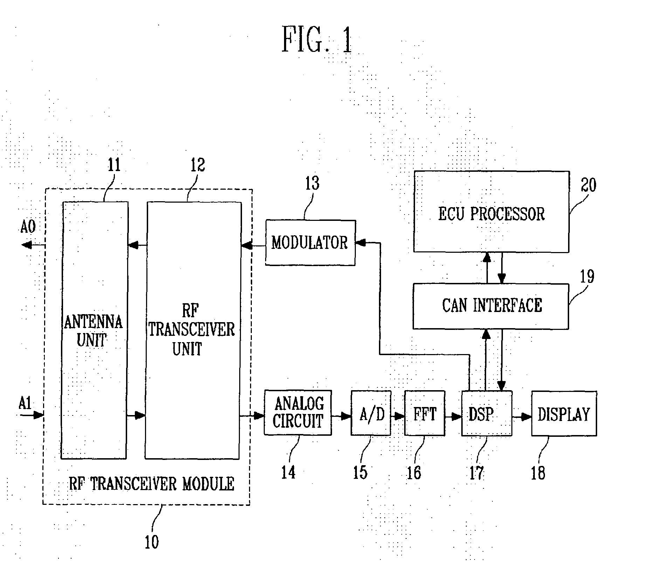

FIG. 1 is a block diagram showing a constitution of a millimeter-wave frequency modulated continuous wave (FMCW) radar sensor employing a radio frequency (RF) transceiver module according to an exemplary embodiment of the present invention.

Referring to FIG. 1, the FMCW radar sensor according to this exemplary embodiment comprises: an RF transceiver module 10 comprising a transceiver antenna unit 11 and an RF transceiver unit 12; an analog circuit 14 connected to an output end of the RF transceiver module 10; an analog-digital (A/D) converter 15 connected to an output end of the analog circuit 14; a fast Fourier transformer (FFT) 16 connected to an output end of the A/D converter 15; a digital signal processor (DSP) 17 connected to an output end of the FFT 16; a display 18 connected to the DSP 17 and displaying information obtained from a received signal; a controller area network (CAN) interface 19 connected between the DSP 17 and an electronic control unit (ECU) processor 20; and a modulator 13 connected to an input end of the RF transceiver module 10 and FMCW-modulating a signal according to control of the DSP 17.

The millimeter-wave FMCW radar sensor operates according to the following steps. First, a signal FMCW-modulated by the modulator 13 is carried on a millimeter wave and then amplified at the RF transceiver unit 12 and transmitted through the transceiver antenna unit 11. When the transmitted signal arrives at an object and is reflected back, it is received as a received signal including data of relative velocity and distance between the object and a radar system through the transceiver antenna unit 11. The received signal is converted into a beat signal including the data of relative velocity and distance at the RF transceiver unit 12 of the RF transceiver module 10 and then transferred to the analog circuit 14. Subsequently, the A/D converter 15, Fourier-transformed by the FFT 16, and then processed by the DSP 17 processes the transferred signal. The DSP 17 drives the modulator 13 to modulate the signal, transfers information to the display 18 to display data on a screen, and transfers the data through the CAN interface 19 to the ECU processor 20.

The RF transceiver module used in the millimeter-wave FMCW radar sensor shows superior performance in dynamic range, overall detection range, etc. according to the structure. Thus, the millimeter-wave FMCW radar sensor of the present invention overcomes the drawback of a conventional vehicular FMCW radar structure using a homodyne solution that the dynamic range of a sensor module is reduced by interference between the transmitted signal and the received signal resulting in an insufficient detection range. Consequently, the millimeter-wave FMCW radar sensor of the present invention has improved reception sensitivity in all conditions such as bad weather, day and night, etc. The RF transceiver module according to the present invention will be described in detail below.

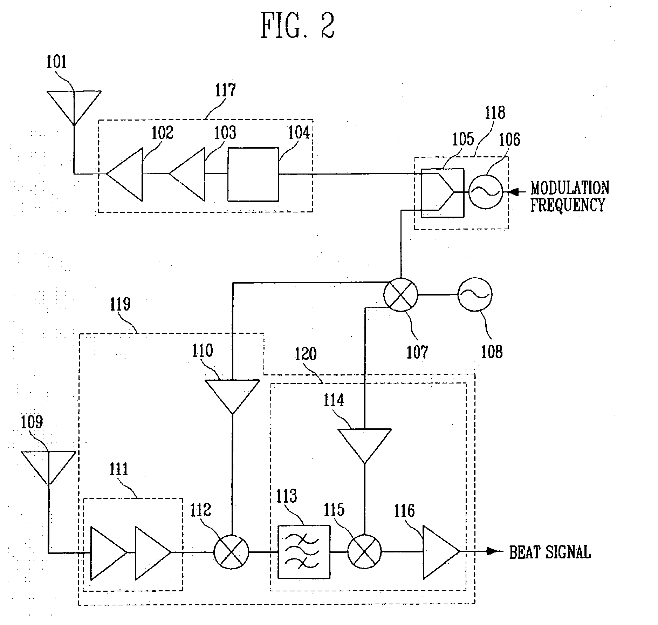

FIG. 2 is a block diagram of an RF transceiver module according to an exemplary embodiment of the present invention.

Referring to FIG. 2, the RF transceiver module according to an exemplary embodiment of the present invention comprises a transmitting antenna 101, a power amplifier 102, a driver amplifier 103, a frequency multiplier 104, a power divider 105, a voltage-controlled oscillator (VCO) 106, a balanced frequency mixer 107, a local oscillator 108, a receiving antenna 109, a first amplifier 110, a low-noise amplifier 111, a down frequency mixer 112, a band-pass filter 113, a second amplifier 114, an IF mixer 115, and an IF amplifier 116. The power amplifier 102, the driver amplifier 103 and the frequency multiplier 104 constitute a transmitting unit 117. The VCO 106 and the power divider 105 constitute a signal source block 118. The local oscillator 108 and the balanced frequency mixer 107 constitute a balanced mixer unit up/down-converting a modulation signal obtained from the transmitting unit 117 and outputting the converted signals to a receiving unit 119. The first and second amplifiers 110 and 114, the low-noise amplifier 111, the down frequency mixer 112, the band-pass filter 113, the IF mixer 115, and the IF amplifier 116 constitute the receiving unit 119. The second amplifiers 114, the band-pass filter 113, the IF mixer 115, and the IF amplifier 116 constitute the IF unit 120.

In the signal source block 118, the VCO 106 includes an input modulation frequency fm in a microwave or a millimeter wave fo and outputs it. In other words, the VCO 106 outputs a modulation signal (fo+fm) that is the sum of the basic wave fo and the modulation frequency fm. For example, a signal source having a modulation bandwidth of 100 MHz in a 38.25 GHz band and an output power of 5 dBm can be used as the VCO 106, which is preferably implemented by a monolithic microwave integrated circuit (MMIC) or a Gunn diode. The power divider 105 is connected to an output end of the VCO 106, divides power of the modulation signal (fo+fm) output from the VCO 106, and outputs the modulation signal to the transmitting unit 117 and the receiving unit 119.

In the transmitting unit 117, the frequency multiplier 104 doubles the modulation signal output from the power divider 105 of the signal source block 118 to a double harmonic and outputs a doubled harmonic signal (2fo+2fm). The driver amplifier 103 is connected to an output end of the frequency multiplier 104 and amplifies RF gain of the doubled signal. The power amplifier 102 is connected to an output end of the driver amplifier 103 and amplifies the power of the gain-amplified signal. The transmission modulation signal output from an output end of the power amplifier 102 is radiated through the transmitting antenna 101.

The frequency multiplier 104 of the present invention is made of an MMIC and may have an input frequency bandwidth of 38 to 38.5 GHz and an output frequency bandwidth of 76 to 77 GHz. Preferably, the frequency multiplier 104 has superior characteristics of an input frequency suppressing an output frequency and input/output matching. The doubled modulation signal is applied to the driver amplifier 103, which is made of an MMIC and operates in a band of, e.g., 76 to 77 GHz, to compensate for conversion loss of the frequency multiplier 104. The power amplifier 102, also made of an MMIC, is disposed at the output side of the driver amplifier 103. Preferably, an output power of the power amplifier 102 is 13 dBm so as to satisfy a current 10 dBm standard for output power of a radar sensor. An output power of, e.g., 10 dBm is radiated from the transmitting antenna 101. Here, a patch array antenna may be used as the transmitting antenna 101. The frequency multiplier 104, the driver amplifier 103 and the power amplifier 102 of the transmitting unit 117 may each be made of a separate MMIC or may all be integrated into one MMIC chip.

In the balanced mixer unit, the balanced frequency mixer 107 up and down-converts the modulation signal (fo+fm) output from the power divider 105 of the signal source block 118 using a local oscillation signal fa generated by the local oscillator 108, and outputs a converted first signal (fo+fm+fa) and a converted second signal (fo+fm-fa) to the two different amplifiers 110 and 114 of the receiving unit 119, respectively.

In the receiving unit 119, the down frequency mixer 112 mixes a received signal (2fo+fb+2fa) with the first signal transferred through the first amplifier 110 to a local terminal, and outputs a mixed third signal (fo+fb-fa+fm) to an intermediate frequency (IF) block 120. Here, the received signal is received at the receiving antenna 109 and then transferred to an RF terminal of the down frequency mixer 112 through the low-noise amplifier 111.

In the IF block 120, the IF mixer 115 mixes the third signal passed through the band-pass filter 113 to pass only a desired frequency with the second signal transferred through the second amplifier 114 to a local terminal, and outputs the mixed signal to an IF output terminal. The IF amplifier 116 is connected to an output end of the IF mixer 115, amplifies a beat signal fb output from the IF mixer 115, and transfers the amplified beat signal to a DSP of a radar sensor. Here, the beat signal corresponds to deviation in the received signal resulting from the Doppler effect.

The first amplifier 110, the low-noise amplifier 111 and the down frequency mixer 112 of the receiving unit 119 may each be made of a separate MMIC or integrated into one MMIC chip. And, an RF band-pass filter passing only frequencies of a desired band and fabricated in a waveguide form may be used as the band-pass filter 113 of the receiving unit 119.

In the present invention, unlike a conventional transceiver using a homodyne solution, a modulation signal of the transmitting unit 117 is not directly transferred to the down frequency mixer 112 of the receiving unit 119. Instead, in order to separately use the transmission modulation signal and the local oscillation signal of the receiving unit 119, the local oscillation signal of the local oscillator 108 and the modulation signal output from the VCO 106 are up and down-converted by the balanced frequency mixer 107, and the converted first and second signals are transferred to the receiving unit 119. Here, in order to compensate for conversion loss of the balanced frequency mixer 107, the first and second signals transferred to the receiving unit 119 are respectively passed through the two different amplifiers 110 and 114 and applied to the LO terminals of the two frequency mixers 112 and 115 of the receiving unit 119 and the IF block 120. According to this constitution, a modulation signal of the transmitting unit 117 is isolated from a received signal and thus not affected by interference from the received signal in the RF transceiver module.

In other words, in the present invention, a pair of frequencies generated by balance-mixing the local oscillation signal fa generated by the local oscillator 108 with a modulation signal output from the VCO 106 of the transmitting unit 117 are applied to the two frequency mixers 112 and 115 of the receiving unit 119. On the other hand, conventionally, when a modulation signal output from a VCO of a transmitting unit is directly used, signal interference occurs between the transmitting unit and a receiving unit. The present invention solves this problem and improves separation of transmission and reception. Since differences between the transmission modulation signal (2fo+2fm) of the transmitting unit 117, the first signal (fo+fm+fa) output from the balanced frequency mixer 107, and the third signal (fo+fb-fa+fm) down-converted by the first signal are very large, interference between signals of the transmitting unit and the receiving unit is significantly reduced. Consequently, system performance can be improved by increasing the dynamic range of the receiving unit and the detection range of the radar sensor.

For example, when the local oscillation signal fa is 1 GHz, a modulation signal (fo+fm) is 38.25 GHz and a transmitted signal (2fo+2fm) is 76.5 GHz. fb is a beat frequency on the order of MHz corresponding to a frequency deviation obtained when a transmitted signal is reflected from an obstacle. In this case, a received signal of (76.5 GHz + fb) is input to the down frequency mixer, down-converted by the first signal (fo+fm+fa) into a signal of (37.25 GHz + fb), and converted by the second signal (fo+fm-fa) of 37.25 GHz at the IF mixer. Then, the signal fb is amplified at the IF amplifier and transferred as the beat signal to a DSP.

For an additional example, it is assumed that the local oscillation signal fa is 37.25 GHz, a modulation signal (fo+fm) is 38.25 GHz and a transmitted signal (2fo+2fm) is 76.5 GHz. In this case, a received signal of (76.5 GHz + fb) is input to the down frequency mixer, down-converted by the first signal (fo+fm+fa) into a signal of (1 GHz + fb), and converted by the second signal (fo+fm-fa) of 1 GHz at the IF mixer. Then, the signal fb is amplified at the IF amplifier and transferred as a beat signal to the DSP.

The present invention can solve the problem of an adjacent signal spectrum characteristic, that is, deterioration of reception sensitivity occurring because a signal transferred from a transmitting unit to a receiving unit is somewhat higher than a signal received through a receiving antenna, in a conventional RF transceiver. In other words, the present invention can improve isolation of an RF transceiver module.

As the above-mentioned transmitting antenna and receiving antenna, at least one of a parabolic antenna, a lens antenna, a microstrip patch array antenna and a horn antenna, as well as a patch array antenna, may be selected and used.

As described above, an RF transceiver module for a millimeter-wave radar sensor according to the present invention can solve the problem of reception sensitivity deterioration occurring in a conventional RF transceiver module using a homodyne solution. In other words, the present invention can improve the reception sensitivity of an RF transceiver module for a millimeter-wave radar sensor by about 20 to 30 dB. In addition, the RF transceiver module using an MMIC and a heterodyne solution can be easily applied to a 77 GHz-band radar sensor for preventing automobile collisions, an adaptive automatic cruise control (ACC) system using the sensor, etc., and can improve performance of a system employing it.

While the invention has been shown and described with reference to certain exemplary embodiments thereof, it will be understood by those skilled in the art that various changes in form and details may be made therein.

## Claims

1. A radio frequency (RF) transceiver module for a radar sensor, comprising:
a transmitting unit (117) having a power divider (105) dividing a modulation signal generated by a voltage-controlled oscillator (106) and a frequency multiplier (104) for doubling the modulation signal output from the power divider (105), means (103, 102) for amplifying the modulation signal, and for radiating the amplified modulation signal through a transmitting antenna (101); **characterized by**
a balanced mixer unit up/down-converting the modulation signal output from the power divider (105) using a local oscillation signal output from a local oscillator (108), and outputting converted first and second signals; and
a receiving unit (119) down-mixing an external signal received through a receiving antenna (109) with the first signal using a down frequency mixer (112), mixing a down-mixed third signal with the second signal using an intermediate frequency (IF) mixer (115), and outputting the mixed signal.

2. The RF transceiver module of claim 1, further comprising:
first and second amplifiers (110, 114) respectively connected between a balanced frequency mixer (107) included in the balanced mixer unit and the down frequency mixer (112) and between the balanced frequency mixer (107) and the IF mixer (115).

3. The RF transceiver module of claim 2, wherein the transmitting unit comprises:
a driver amplifier (103) and a power amplifier (102) for amplifying an output signal of the frequency multiplier (104) and transferring the amplified output signal to the transmitting antenna (101),
wherein the frequency multiplier (104), the driver amplifier (103) and the power amplifier (102) are respectively made of monolithic microwave integrated circuits (MMICs).

4. The RF transceiver module of claim 2 or 3, wherein the receiving unit (119) comprises:
a low-noise amplifier (111) connected between the receiving antenna (109) and the down frequency mixer (112),
wherein the low-noise amplifier (111), the first and second amplifiers (110, 114), and the down frequency mixer (112) are respectively made of MMICs.

5. The RF transceiver module of claim 2, wherein the transmitting unit (117) comprises
a driver amplifier (103) and a power amplifier (102) for amplifying an output signal of the frequency multiplier (104) and transferring the amplified output signal to the transmitting antenna (101),
wherein the frequency multiplier (104), the driver amplifier (103) and the power amplifier (102) are integrated into one MMIC chip.

6. The RF transceiver module of claim 2 or 5, wherein the receiving unit (119) comprises:
a low-noise amplifier (111) connected between the receiving antenna (109) and the down frequency mixer (112),
wherein the low-noise amplifier (111), the first and second amplifiers (110, 114), and the down frequency mixer (112) are integrated into one MMIC chip.

7. The RF transceiver module of one of claims 1 to 6, further comprising:
a band-pass filter (113) connected between the down frequency mixer (112) and the IF mixer (115).

8. The RF transceiver module of one of claims 1 to 7, further comprising:
an IF amplifier (116) for amplifying a signal output from the IF mixer (115) and outputting the amplified signal as a beat signal.

9. A millimeter-wave frequency modulated continuous wave (FMCW) radar sensor comprising an RF transceiver module (10) according to one of claims 1, 2, 7, or 8.

## Patentansprüche

1. Hochfrequenz-(HF-)Sender/Empfänger-Modul für einen Radarsensor, das umfasst:
eine Sendeeinheit (117) mit einem Leistungsteiler (105), der ein durch einen spannungsgesteuerten Oszillator (106) erzeugtes Modulationssignal teilt, einem Frequenzvervielfacher (104) zum Verdoppeln des von dem Leistungsteiler (105) ausgegebenen Modulationssignals und Mitteln (103, 102) zum Verstärken des Modulationssignals und zum Abstrahlen des verstärkten Modulationssignals durch eine Sendeantenne (101); **gekennzeichnet durch**
eine Gegentakt-Mischstufeneinheit zum Aufwärts/Abwärts-Umsetzen des von dem Leistungsteiler (105) ausgegebenen Modulationssignals unter Verwendung eines von einem Hilfsoszillator (108) ausgegebenen Hilfsoszillationssignals und zum Ausgeben umgesetzter erster und zweiter Signale; und
eine Empfangseinheit (119) zum Abwärtsmischen eines **durch** eine Empfangsantenne (109) empfangenen externen Signals mit dem ersten Signal unter Verwendung eines Abwärtsfrequenzmischers (112), zum Mischen eines abwärts gemischten dritten Signals mit dem zweiten Signal unter Verwendung eines Zwischenfrequenzmischers (ZF-Mischer) (115) und zum Ausgeben des gemischten Signals.

2. HF-Sender/Empfänger-Modul nach Anspruch 1, das ferner umfasst:
einen ersten und einen zweiten Verstärker (110, 114), die zwischen eine in der Gegentakt-Mischstufeneinheit enthaltene Gegentakt-Frequenzmischstufe (107) und den Abwärtsfrequenzmischer (112) bzw. zwischen die Gegentakt-Frequenzmischstufe (107) und den ZF-Mischer (115) geschaltet sind.

3. HF-Sender/Empfänger-Modul nach Anspruch 2, wobei die Sendeeinheit umfasst:
einen Treiberverstärker (103) und einen Leistungsverstärker (102) zum Verstärken eines Ausgangssignals des Frequenzvervielfachers (104) und zum Übertragen des verstärkten Ausgangssignals an die Sendeantenne (101),
wobei der Frequenzvervielfacher (104), der Treiberverstärker (103) und der Leistungsverstärker (102) jeweils aus monolithischen integrierten Mikrowellenschaltungen (MMIC) hergestellt sind.

4. HF-Sender/Empfänger-Modul nach Anspruch 2 oder 3, wobei die Empfangseinheit (119) umfasst.
einen Verstärker (111) mit niedrigem Rauschen, der zwischen die Empfangsantenne (109) und den Abwärtsfrequenzmischer (112) geschaltet ist,
wobei der Verstärker (111) mit niedrigem Rauschen, der erste und der zweite Verstärker (110, 114) sowie der Abwärtsfrequenzmischer (112) jeweils aus MMICs hergestellt sind.

5. HF-Sender/Empfänger-Modul nach Anspruch 2, wobei die Sendeeinheit (117) umfasst:
einen Treiberverstärker (103) und einen Leistungsverstärker (102) zum Verstärken eines Ausgangssignals des Frequenzvervielfachers (104) und zum Übertragen des verstärkten Ausgangssignals an die Sendeantenne (101),
wobei der Frequenzvervielfacher (104), der Treiberverstärker (103) und der Leistungsverstärker (102) in einen MMIC-Chip integriert sind.

6. HF-Sender/Empfänger-Modul nach Anspruch 2 oder 5, wobei die Empfangseinheit (119) umfasst:
einen Verstärker (111) mit niedrigem Rauschen, der zwischen die Empfangsantenne (109) und den Abwärtsfrequenzmischer (112) geschaltet ist,
wobei der Verstärker (111) mit niedrigem Rauschen, der erste und der zweite Verstärker (110, 114) und der Abwärtsfrequenzmischer (112) in einen MMIC-Chip integriert sind.

7. HF-Sender/Empfänger-Modul nach einem der Ansprüche 1 bis 6, das ferner umfasst:
ein Bandpassfilter (113), das zwischen den Abwärtsfrequenzmischer (112) und den ZF-Mischer (115) geschaltet ist.

8. HF-Sender/Empfänger-Modul nach einem der Ansprüche 1 bis 7, das ferner umfasst:
einen ZF-Verstärker (116) zum Verstärken eines von dem ZF-Mischer (115) ausgegebenen Signals und zum Ausgeben des verstärkten Signals als ein Schwebungssignal.

9. Frequenzmodulierter Dauerstrichradarsensor (FMCW-Radarsensor) im Millimeterwellenbereich, der ein HF-Sender/Empfänger-Modul (10) nach einem der Ansprüche 1, 2, 7 oder 8 umfasst.

## Revendications

1. Module émetteur-récepteur radiofréquence (RF) pour un capteur radar, comprenant :
une unité d'émission (117) ayant un diviseur de puissance (105) divisant un signal de modulation généré par un oscillateur commandé en tension (106) et un multiplicateur de fréquence (104) pour doubler le signal de modulation sorti du diviseur de puissance (105), des moyens (103, 102) pour amplifier le signal de modulation, et pour rayonner le signal de modulation amplifié par l'intermédiaire d'une antenne d'émission (101) ; **caractérisé par**
une unité de mélangeur équilibré convertissant par élévation/abaissement le signal de modulation sorti du diviseur de puissance (105) en utilisant un signal d'oscillation locale sorti d'un oscillateur local (108), et sortant des premier et deuxième signaux convertis ; et
une unité de réception (119) mélangeant par abaissement un signal externe reçu par l'intermédiaire d'une antenne de réception (109) avec le premier signal en utilisant un mélangeur de fréquence abaissée (112), mélangeant un troisième signal mélangé par abaissement avec le deuxième signal en utilisant un mélangeur de fréquence intermédiaire (IF) (115), et sortant le signal mélangé.

2. Module émetteur-récepteur RF selon la revendication 1, comprenant en outre :
un premier et un second amplificateur (110, 114) connectés respectivement entre un mélangeur de fréquence équilibrée (107) inclus dans l'unité de mélangeur équilibrée et le mélangeur de fréquence abaissée (112) et entre le mélangeur de fréquence équilibrée (107) et le mélangeur IF (115).

3. Module émetteur-récepteur RF selon la revendication 2, dans lequel l'unité d'émission comprend :
un amplificateur de commande (103) et un amplificateur de puissance (102) pour amplifier un signal de sortie du multiplicateur de fréquence (104) et transférer le signal de sortie amplifié vers l'antenne d'émission (101),
dans lequel le multiplicateur de fréquence (104), l'amplificateur de commande (103) et l'amplificateur de puissance (102) sont constitués respectivement de circuits intégrés monolithiques hyperfréquences (MMICs).

4. Module émetteur-récepteur RF selon la revendication 2 ou 3, dans lequel l'unité de réception (119) comprend :
un amplificateur à faible bruit (111) connecté entre l'antenne de réception (109) et le mélangeur de fréquence abaissée (112),
dans lequel l'amplificateur à faible bruit (111), les premier et second amplificateurs (110, 114), et le mélangeur de fréquence abaissée (112) sont constitués respectivement de MMICs.

5. Module émetteur-récepteur RF selon la revendication 2, dans lequel l'unité de transmission (117) comprend
un amplificateur de commande (103) et un amplificateur de puissance (102) pour amplifier un signal de sortie du multiplicateur de fréquence (104) et transférer le signal de sortie amplifié vers l'antenne d' émission (101),
dans lequel le multiplicateur de fréquence (104), l'amplificateur de commande (103) et l'amplificateur de puissance (102) sont intégrés dans une puce MMIC.

6. Module émetteur-récepteur RF selon la revendication 2 ou 5, dans lequel l'unité de réception (119) comprend :
un amplificateur à faible bruit (111) connecté entre l'antenne de réception (109) et le mélangeur de fréquence abaissée (112),
dans lequel l'amplificateur à faible bruit (111), les premier et second amplificateurs (110, 114), et le mélangeur de fréquence abaissée (112) sont intégrés dans une puce MMIC.

7. Module émetteur-récepteur RF selon l'une des revendications 1 à 6, comprenant en outre :
un filtre passe-bande (113) connecté entre le mélangeur de fréquence abaissée (112) et le mélangeur IF (115).

8. Module émetteur-récepteur RF selon l'une des revendications 1 à 7, comprenant en outre :
un amplificateur IF (116) pour amplifier un signal sorti du mélangeur IF (115) et sortir le signal amplifié comme un signal de battement.

9. Capteur radar FMCW (onde continue à fréquence modulée) à ondes millimétriques comprenant un module émetteur-récepteur RF (10) selon l'une des revendications 1, 2, 7 ou 8.
